# EUROPEAN PATENT SPECIFICATION

(11) **EP 2 093 932 B1**
(45) Date of publication and mention of the grant of the patent: **22.01.2014**
(21) Application number: 08706685.8
(22) Date of filing: 15.02.2008
(51) Int. Cl.: H04L 12/761, H04L 12/18

(54) **MULTICAST METHOD AND DEVICE**
MULTICAST-VERFAHREN UND -VORRICHTUNG
PROCÉDÉ ET DISPOSITIF DE DIFFUSION MULTIDESTINATAIRE

(30) Priority: 10.05.2007 CN 200710106853
(43) Date of publication of application: 26.08.2009
(73) Proprietor: Huawei Technologies Co., Ltd., Longgang District, Shenzhen Guangdong 518129 (CN)
(72) Inventor: CAO, Wei, Shenzhen Guangdong 518129 (CN); LI, Jian, Shenzhen Guangdong 518129 (CN); LIU, Enhui, Bejing 100085 (CN)
(74) Representative: Thun, Clemens
(86) International application number: PCT/CN2008/070312
(87) International publication number: WO 2008/138236

(56) References cited:
- CN-A- 1 747 447
- CN-A- 1 859 146
- US-A1- 2006 262 792
- JUN-HONG CUI ET AL: "Aggregated Multicast - A Comparative Study" CLUSTER COMPUTING, KLUWER ACADEMIC PUBLISHERS, BO, vol. 8, no. 1, 1 January 2005 (2005-01-01), pages 15-26, XP019205396 ISSN: 1573-7543

## Description

### FIELD OF THE INVENTION

The present invention relates to multicast technologies, and in particular, to a multicast method and apparatus.

### BACKGROUND

The multicast technology is a one-to-many multi-party communication mode. It reduces consumption of network resources in the multi-party communication by creating the best forwarding path.

The Internet Protocol (IP) multicast is based on the Protocol Independent Multicast (PIM) protocol. Besides, with the development of the Multi-Protocol Label Switching (MPLS) technology, the multicast data may also be forwarded through the MPLS technology, thus forming a Point-To-MultiPoint (P2MP) or MultiPoint-To-MultiPoint (MP2MP) forwarding path. The method for forwarding the multicast data through the MPLS technology is based on the Label Distribution Protocol (LDP) or the Resource ReSerVation Protocol-Traffic Engineering (RSVP-TE).

Currently, both the PIM protocol and the MPLS technology use a dynamically created forwarding path, namely, a multicast forwarding subtree, to forward multicast data. For example, when a multicast data receiving member, namely, a leaf router, joins a multicast forwarding tree, the multicast forwarding tree creates a multicast forwarding subtree corresponding to the leaf router according to the network topology, and then forwards the multicast data to the newly added leaf router through the multicast forwarding subtree. When the leaf router in the multicast forwarding tree quits, the multicast forwarding tree prunes the multicast forwarding subtree corresponding to the leaf router. Consequently, the response period of forwarding the multicast data is long, the experience of the multicast service is deteriorated, and the need of developing the multicast service is not satisfied.

US 2006/262792A1 discloses a system and method for providing both static and dynamic IP multicasting. The concept of a multicast Static-Range is introduced which allows the coexistence of static and dynamic IP multicast. The multicast Static-Range is a set of Class D IP addresses which is reserved for static multicasting, and is configured at all routers. When a router receives a PIM message or an IGMP message, the router determines whether the group specified in the message is within the multicast Static-Range. If the group pertains to a static multicasting group, the router does not propagate the message to upstream routers using PIM-SM or PIM-SSM protocols, and only connects or disconnects interfaces internal to the router. If the multicast group address in the message is not within the multicast Static-Range, the router recognizes that the message pertains to a dynamic multicasting group and implements PIM or IGMP protocols as usual. If the invention is used for broadcasting TV, the low end of TB channels or commonly used channels can be created as static IP multicast. This way, a user can access or leave such channels without an entire shortest path tree being created or torn down, improving access time and channel surfing for a user. Also, pay-per-view, digital or less frequently used channels can be created using dynamic IP multicast with traditional PIM-SSM protocol, in order to make efficient use of router resources.

### SUMMARY

A multicast method is provided in an embodiment of the present invention to improve the experience of receiving the multicast data.

A multicast apparatus is provided in another embodiment of the present invention to improve the experience of receiving the multicast data.

The multicast method disclosed herein includes
setting a multicast forwarding subtree of a multicast forwarding tree to a state of not forwarding multicast data and forbidding multicast data to be forwarded through the multicast forwarding subtree when a leaf router in the multicast forwarding tree fulfills preset quit conditions and leaves the multicast forwarding tree; wherein the multicast forwarding subtree is created corresponding to the leaf router;
retaining the multicast forwarding subtree; and
changing the multicast forwarding subtree from the state of not forwarding the multicast data to a state of forwarding the multicast data and forwarding multicast data through the multicast forwarding subtree when the leaf router needs to join the multicast forwarding tree again and receive the multicast data.

The multicast apparatus disclosed herein includes:
a multicast data storing module, configured to store multicast data;
a forwarding path module, configured to store a forwarding path corresponding to a multicast forwarding subtree of a multicast forwarding tree; wherein the multicast forwarding subtree is created corresponding to a leaf router;
a state control module, configured to determine whether the multicast forwarding subtree needs to forward data: if the leaf router in the multicast forwarding tree fulfills preset quit conditions and leaves the multicast forwarding tree, set the multicast forwarding subtree to be in a state of not forwarding multicast data, and send a stop-forwarding command to the forwarding module; if the leaf router needs to join the multicast forwarding tree again and receive the multicast data, set the multicast forwarding subtree to be in a state of forwarding multicast data, and send a forwarding command to a forwarding module; and
the forwarding module, configured to: stop forwarding the multicast data according to the stop-forwarding command from the state control module; or forward the multicast data from the multicast data storing module according to the forwarding command from the state control module through the forwarding path from the forwarding path module.

### BRIEF DESCRIPTION OF THE DRAWINGS

FIG. 1 is a flowchart of a multicast method provided in an embodiment of the present invention;
FIG. 2 shows a structure of a multicast forwarding tree in an embodiment of the present invention;
FIG. 3 is a flowchart of a method for a leaf router to join a multicast forwarding tree in an embodiment of the present invention;
FIG. 4 is a flowchart of a method for a leaf router to quit a multicast forwarding tree in an embodiment of the present invention; and
FIG. 5 shows a structure of a multicast apparatus in an embodiment of the present invention.

### DETAILED DESCRIPTION

In the embodiments of the present invention, for ease of description, if a multicast forwarding subtree is in a state of not forwarding multicast data, the state of not forwarding multicast data is called a "standby state"; if a multicast forwarding subtree is in a state of forwarding multicast data, the state of forwarding multicast data is called an "active state".

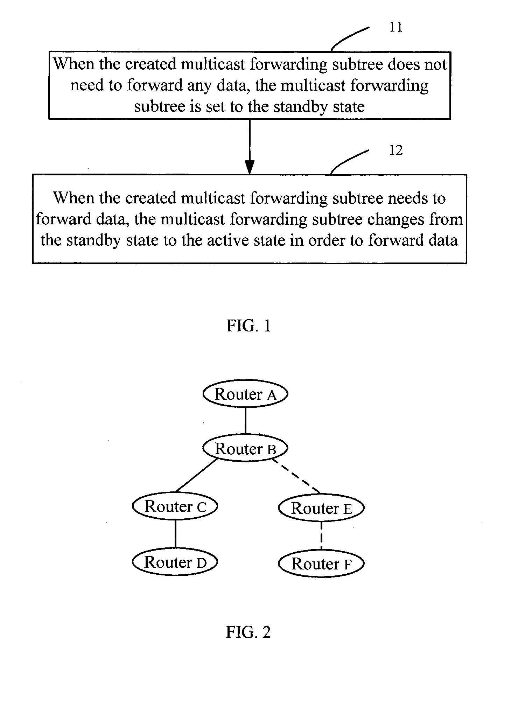

FIG. 1 shows a process of a multicast method provided in an embodiment of the present invention. As shown in FIG. 1, the method includes the following steps:

Step 11: When a created multicast forwarding subtree does not need to forward any data, the multicast forwarding subtree is set to the standby state.

In the multicast forwarding tree, a router may be included in multiple multicast forwarding subtrees, and the multiple multicast forwarding subtrees may be in different states. This embodiment takes a multicast forwarding subtree that contains the router as an example.

The standby state of the multicast forwarding subtree means that the forwarding path corresponding to the multicast forwarding subtree is created but no forwarding of multicast data is in process. The state of the multicast forwarding subtree may be set through the router located in the multicast forwarding subtree. The multicast forwarding subtree may include one or more routers. In the router, the state of the multicast forwarding subtree is set by setting the state of the egress interface of the downstream branch of the multicast forwarding subtree.

In the embodiment, a state identifier denoted by a data structure is set in the egress interface information of the corresponding multicast forwarding subtree of the router. Each value of the state identifier represents a different state of the multicast forwarding subtree. If the value of the state identifier represents a standby state, only a multicast forwarding subtree needs to be created, without forwarding any multicast data. If the value of the state identifier represents an active state, the multicast data is forwarded by using the created multicast forwarding subtree. The state identifier denoted by a data structure may be a flag bit. The flag bit may use 1 to represent the standby state of the router and use 0 to represent the active state of the router. The routers in the multicast forwarding subtree work jointly to set the state of the multicast forwarding subtree.

In a multicast forwarding subtrees based on different multicast protocols, differentiating the state of the egress interface of the router by setting a state identifier is a well-known technology to those skilled in the art, and is not detailed here any further. The multicast forwarding subtrees based on different multicast protocols include: PIM-based multicast forwarding subtree, MPLS-based multicast forwarding subtree, and so on.

This embodiment further includes: setting the multicast forwarding subtree to the standby state in the process of creating a multicast forwarding subtree.

After a router compliant with preset join conditions sends a request of creating a multicast forwarding subtree before the multicast forwarding subtree is created, the multicast forwarding subtree is set to the standby state in the process of creating the multicast forwarding subtree.

The preset join conditions are configured manually, or configured dynamically according to a policy. For example, in an IPTV application environment, the preset join conditions may be set to "low demand ratio" according to the operation policy. That is, the router corresponding to an unpopular program demanded by the users infrequently is determined as a leaf router compliant with the preset join conditions. In this way, the router corresponding to the unpopular program does not need to receive multicast data, thus avoiding waste of multicast resources. At the same time, it is probable that the unpopular program is demanded by the user randomly. Because the corresponding multicast forwarding subtree has been created, the user who demands the unpopular program may watch the demanded program without long waiting, thus improving the user experience of the multicast service.

The request of creating a multicast forwarding subtree may be sent by a leaf router or a root node router, and the request notifies the multicast forwarding tree to create a multicast forwarding subtree in the standby state. The request of creating a multicast forwarding subtree may be a join request in different existing protocols. The join request carries additional information indicative of the message type to serve as a request of creating a multicast forwarding subtree, or uses user-defined interaction information as a request of creating a multicast forwarding subtree.

Step 12: When the created multicast forwarding subtree needs to forward data, the multicast forwarding subtree changes from the standby state to the active state to forward data.

When the leaf router in the multicast forwarding subtree sends a multicast data forwarding request, the multicast forwarding subtree corresponding to the leaf router needs to forward data, the state of the multicast forwarding subtree is set to "active", and the multicast data is transferred through the multicast forwarding subtree.

When the leaf router needs to receive multicast data, it sends a multicast data forwarding request. The router on the multicast forwarding subtree receives the multicast data forwarding request and sets the corresponding egress interface state to "active". Then, the multicast data forwarding request is transferred to the upstream router. Finally, the egress interfaces of all routers in the multicast forwarding subtree are in the active state, and the multicast forwarding subtree can forward the multicast data.

Evidently, in step 12, after the leaf router sends a multicast data forwarding request, the multicast forwarding subtree needs only to change from the standby state to the active state, and then forward the multicast data to the leaf router without path calculation. That is, the period from the leaf router sending a join request to receiving the multicast data is shortened drastically, the experience of the multicast application services, especially real-time services, is improved noticeably, and the development of the multicast services is expedited.

Further, when a leaf router satisfying preset quit conditions sends a state changeover request, the multicast forwarding subtree does not need to forward the multicast data, but sets the multicast forwarding subtree to the standby state, stops forwarding the multicast data, and retains the multicast forwarding subtree.

The preset quit conditions may be configured manually, or configured dynamically according to a policy. If a router needs to stop receiving multicast data but probably needs to rejoin the multicast forwarding tree, the router needs to comply with the preset quit conditions.

After receiving a state changeover request, the multicast forwarding tree changes the state of the multicast forwarding subtree to "standby". The state changeover request may be sent by a leaf router or a root node router, and notifies the multicast forwarding tree to change the multicast forwarding subtree from the active state to the standby state. The state changeover request may be a prune request in different existing protocols. The prune request carries additional information which indicates the message type to serve as a state changeover request, or uses user-defined interaction information as a state changeover request.

Evidently, when the leaf router joins or quits a multicast forwarding tree frequently, it is not necessary for the multicast forwarding tree to create and prune the same multicast forwarding subtree repeatedly. Instead, when the leaf router quits the multicast forwarding tree, the multicast data forwarding is stopped, but the created multicast forwarding subtree is retained. When the leaf router joins the multicast forwarding tree again, it is necessary only to modify the state of the multicast forwarding subtree. In this way, the load of the multicast device is relieved, the processing efficiency of the multicast device is improved, and the requirements on the development of the multicast services are satisfied.

FIG. 2 shows a structure of a multicast forwarding tree in an embodiment of the present invention. As shown in FIG. 2, the multicast forwarding tree is composed of router A, router B, router C, router D, router E, and router F.

By reference to the solid line in FIG. 2, router A -> router B -> router C -> router D constitute the first multicast forwarding subtree, and the first multicast forwarding subtree is in the active state, namely, the multicast forwarding subtree is forwarding multicast data. By reference to the dotted line in FIG. 2, router B -> router E -> router F constitute the second multicast forwarding subtree, and the second multicast forwarding subtree is in the standby state, namely, no multicast data is being forwarded on the multicast forwarding subtree.

Both multicast forwarding subtrees contain router B. Therefore, as for router B, the downstream branch corresponding to the first multicast forwarding subtree is router C, and the state identifier in the egress interface information of router C is set to the active state; the downstream branch corresponding to the second multicast forwarding subtree is router E, and the state identifier in the egress interface information of router E is set to the standby state. After receiving the multicast data, router B forwards the multicast data only to the first multicast forwarding subtree.

Taking the multicast forwarding tree based on the LDP in the MPLS multicast and illustrated in FIG. 2 as an example, the method for a leaf router to join a multicast forwarding tree in an embodiment of the present invention is detailed below.

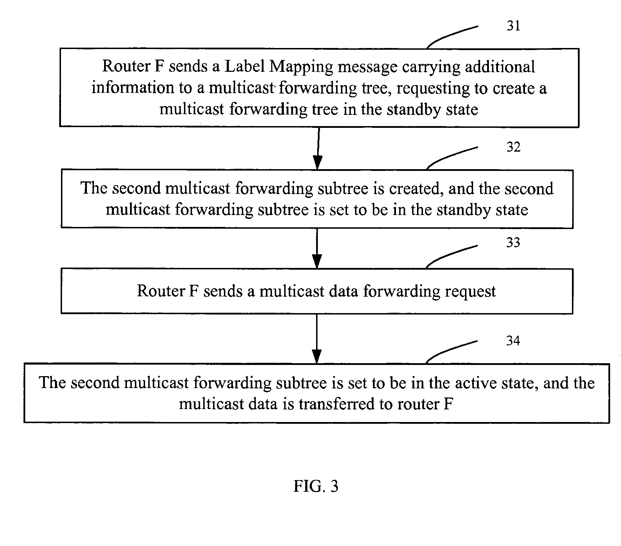

FIG. 3 is a flowchart of a method for a leaf router to join a multicast forwarding tree in an embodiment of the present invention. This embodiment supposes that: Router F is a leaf router compliant with preset join conditions; in the multicast forwarding tree shown in FIG. 2, router F needs to join the second multicast forwarding subtree which is not created. As shown in FIG. 3, the process of the method for a leaf router to join a multicast forwarding tree includes the following steps:

Step 31: The router F sends a Label Mapping message carrying additional information to a multicast forwarding tree, requesting to create a multicast forwarding subtree in the standby state.

By reference to the multicast forwarding tree in FIG. 2, the upstream apparatus of router F is router E, and router E receives the Label Mapping message carrying the additional information from router F first.

In this embodiment, the additional information carried in the Label Mapping message is a data bit. This embodiment supposes that the additional information "1" indicates setting the multicast forwarding subtree to the standby state, and the additional information "0" indicates the need of creating a multicast forwarding subtree and forwarding the multicast data, namely, the existing functions of the Label Mapping message are not changed when the additional information is "0". In this step, the additional information is "1", and the multicast forwarding tree is notified to create a multicast forwarding subtree in the standby state.

The leaf router may also join a multicast forwarding tree based on the PIM, or RSVP-TE or other protocols by sending a request of creating a multicast forwarding subtree. The request of creating a multicast forwarding subtree may be a join message in the protocol or additional information in another signaling. For example, when joining a multicast forwarding tree based on the PIM protocol, the leaf router may add additional information into the "join" message, thus requesting to create a multicast forwarding subtree. In a multicast forwarding tree based on the RSVP-TE protocol, the leaf router may let the additional information be carried in a response message (resv), or the root node router may let the additional information be carried in the path message, thus requesting to create a multicast forwarding subtree. Besides, the leaf router may also use another message in the connection management protocol or a user-defined protocol extension message as a request of creating a multicast forwarding subtree.

Step 32: A second multicast forwarding subtree is created, and the second multicast forwarding subtree is set to be in the standby state.

After receiving a Label Mapping message that carries the additional information "1", the router in the multicast forwarding tree determines the upstream router through route calculation, transmits the Label Mapping message upward consecutively, and creates a multicast forwarding subtree. The router that receives the Label Mapping message sets a state identifier of the egress interface of the downstream branch, and sets the second multicast forwarding subtree to be in the standby state. In the multicast forwarding tree shown in FIG. 2, after receiving the Label Mapping message that carries the additional information from router F, router E sets the state identifier in the egress interface information of the corresponding router F to the standby state, and transfers the Label Mapping message carrying the additional information upward to router B through path selection. Therefore, router B has an additional egress interface corresponding to the second multicast forwarding subtree, and sets the state identifier in the egress interface information of the corresponding router E to the standby state.

In this embodiment, the state identifier is a state flag bit. This embodiment supposes that: The state flag bit "1" indicates that the egress interface of the corresponding downstream branch of the router is in the active state, and the state flag bit "0" indicates that the egress interface of the corresponding downstream branch of the router is in the standby state.

In this embodiment, the state of the egress interface is set through a state flag bit "0" or "1", which is only a preferred embodiment of the present invention and is not intended to limit the present invention. Any method for setting the egress interface to be in two different states is covered in the protection scope of the present invention.

Through step 31 and step 32, although router F receives no multicast data, the second multicast forwarding subtree corresponding to router F is created.

Step 33: Router F sends a multicast data forwarding request.

When router F needs to receive multicast data, router F sends a Label Mapping message carrying additional information to the upstream router, where the additional information is "0", thus notifying the router in the multicast forwarding subtree to forward the multicast data.

Router F may also send a Label Mapping message that carries no additional information, thus notifying the multicast forwarding subtree to forward the multicast data.

Step 34: The second multicast forwarding subtree is set to be in the active state, and the multicast data is transferred to router F.

After receiving the Label Mapping message, router E changes the state identifier in the egress interface information of the corresponding router F from the standby state to the active state, and the transfers the multicast data forwarding request to the upstream apparatus, namely, router B. After receiving the multicast data forwarding request, router B changes the state identifier in the egress interface information of the corresponding router E from the standby state to the active state. Because the multicast forwarding subtree from router B to router A is already in the active state, router B does not transfer the multicast data forwarding request any more. In this way, router F receives the multicast data through the second multicast forwarding subtree.

An egress interface of the router may correspond to one or more downstream branches. For example, in the multicast forwarding tree shown in FIG. 2, router B may have the same egress interface corresponding to router C and router E. If the router receives two Label Mapping messages from different downstream branches, where one message carries additional information "0" and the other message carries additional information "1", that is, if there are two multicast forwarding subtrees, one needing to create a multicast forwarding subtree without forwarding multicast data and the other needing to create a multicast forwarding subtree and forward multicast data, the router sets the egress interface to be in the active state.

Evidently, the second multicast forwarding subtree needs only to change from the standby state to the active state, and then forward the multicast data to router F without path calculation. Therefore, the period from the router F sending a multicast data forwarding request to receiving the multicast data is shortened drastically. Taking the P2MP-based multicast forwarding tree as an example, the time spent in adding a leaf router into the multicast forwarding tree decreases from 5 s - 5 min to 20 ms - 500 ms. The waiting time from the leaf router sending a join request to receiving the multicast data is shortened drastically, the experience of the multicast application services, especially real-time services, is improved significantly, and the development of the multicast services is expedited.

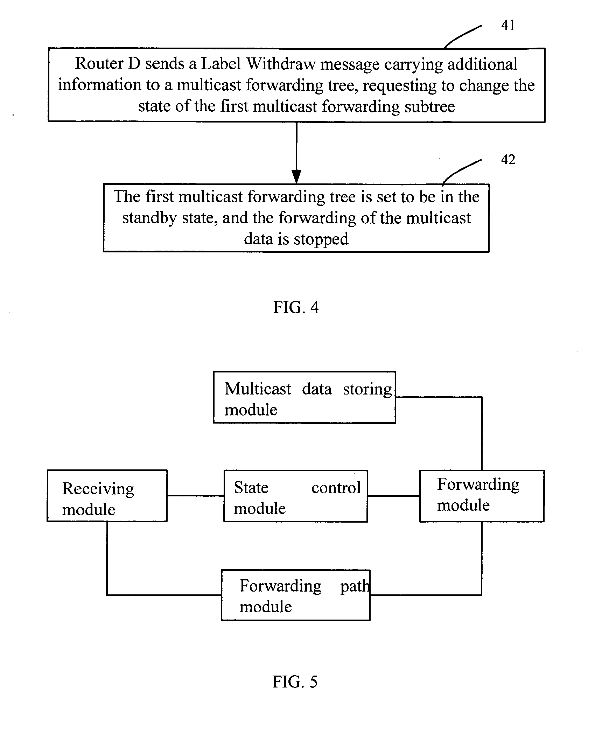

FIG. 4 is a flowchart of a method for a leaf router to quit a multicast forwarding tree in an embodiment of the present invention. This embodiment supposes that: Router D is a leaf router compliant with preset quit conditions; in the multicast forwarding tree shown in FIG. 2, router D requires the first multicast forwarding subtree and stops receiving multicast data from the first multicast forwarding subtree. As shown in FIG. 4, the method for a leaf router to quit a multicast forwarding tree includes the following steps:

Step 41: Router D sends a Label Withdraw message carrying additional information to a multicast forwarding tree. The message requests to change the state of the first multicast forwarding subtree and stop forwarding the multicast data.

By reference to the multicast forwarding tree in FIG. 2, the upstream apparatus of router D is router C, and router C receives the Label Withdraw message carrying the additional information from router D first.

In this embodiment, the additional information is a data bit. This embodiment supposes that the additional information "1" indicates setting the multicast forwarding subtree to the standby state, and the additional information "0" indicates the need of stopping forwarding the multicast data and pruning the multicast forwarding subtree, namely, the existing functions of the Label Withdraw message are not changed when the additional information is "0". In this step, the additional information is "1", and the multicast forwarding tree is notified to only stop forwarding the multicast data.

The leaf router may also quit the PIM-based or RSVP-TE based multicast forwarding tree by sending a state changeover request. For example, when the leaf router quits the PIM-based multicast forwarding tree, additional information may be added into the "prune" message to serve as a request of stopping forwarding the multicast data. In a multicast forwarding subtree based on the RSVP-TE protocol, the leaf router may let the additional information be carried in a resv message, or the root node router may let the additional information be carried in the path message, thus requesting the multicast forwarding subtree to stop forwarding the multicast data. Besides, the leaf router may also use another message in the connection management protocol or a user-defined protocol extension message as a state changeover request.

Step 42: The first multicast forwarding subtree is set to be in the standby state, and the forwarding of the multicast data is stopped.

In this embodiment, when the router in the multicast forwarding subtree receives a Label Withdraw message with the additional information "1", the state identifier bit in the egress interface information of the corresponding downstream branch is set to "0", the forwarding of the multicast data is stopped, and the multicast forwarding subtree is retained. In the multicast forwarding tree shown in FIG. 2, after receiving the Label Withdraw message with the additional information "1", router C sets the state identifier in the corresponding egress interface information to "standby" (namely, the forwarding of the multicast data is stopped, but the multicast forwarding subtree from router D to router C is retained), and sends the state changeover request to router B. After receiving the state changeover request, router B sets the state identifier in the egress interface information corresponding to the first multicast forwarding subtree to "standby".

If the router receives two Label Withdraw messages from different downstream branches, where one message carries additional information "0" and the other message carries additional information "1", that is, if there are two multicast forwarding subtrees, one of which needs to stop forwarding the multicast data without pruning the multicast forwarding subtree and the other needs to stop forwarding the multicast data and prune the multicast forwarding subtree, the router sets the egress interface to be in the standby state, namely, the forwarding of the multicast data is stopped and the existing multicast forwarding subtree is retained.

If the router receives a Label Mapping message and a Label Withdraw message from different downstream branches concurrently, the router executes the Label Mapping message, namely, ensures the multicast forwarding subtree to forward the multicast data.

If router D in step 41 needs to receive the multicast data from the multicast forwarding subtree again after stopping receiving the multicast data, step 33 and step 34 are performed. That is, router B and router C need only to set the corresponding egress interface state to "active" without performing path selection or calculation again. Therefore, the creating and pruning the multicast forwarding subtree repeatedly is avoided, the waiting time from the router D sending a receive-data request to receiving the forwarded data is shortened, and the experience of the multicast service is improved.

Further, when router D quits and joins the multicast forwarding tree frequently, step 41, step 42, step 33, and step 34 may be repeated. Because the first multicast forwarding subtree is always retained, neither router B nor router C needs to perform route selection and calculation frequently. Therefore, the waiting time of router D is shortened, the load of router B and router C is relieved, and the processing efficiency of router B and router C is improved.

FIG. 5 shows a structure of a multicast apparatus provided in an embodiment of the present invention. As shown in FIG. 5, the multicast apparatus includes:
a multicast data storing module, configured to store multicast data;
a forwarding path module, configured to store the forwarding path corresponding to the apparatus that contains the forwarding path module in the multicast forwarding subtree;
a state control module, configured to determine whether the apparatus that contains the state control module needs to forward data: if no data needs to be forwarded, set the apparatus that contains the state control module to be in a state of not forwarding multicast data, and send a stop-forwarding command to the forwarding module; if any data needs to be forwarded, set the apparatus that contains the state control module to be in a state of forwarding multicast data, and send a forwarding command to a forwarding module; and
the forwarding module, configured to: stop forwarding the multicast data according to the stop-forwarding command from the state control module; or forward the multicast data from the multicast data storing module according to the forwarding command from the state control module and the forwarding path from the forwarding path module.

In this embodiment, the multicast apparatus further includes a receiving module.

The receiving module is configured to: receive the multicast data forwarding request or state changeover request from a downstream apparatus or upstream apparatus, and send the multicast data forwarding request or state changeover request to the state control module.

The state control module is further configured to: determine that the apparatus containing the state control module needs to forward data according to the multicast data forwarding request, and determine that the apparatus containing the state control module does not need to forward data according to the state changeover request.

The receiving module is further configured to: receive the request of creating a multicast forwarding subtree from the downstream apparatus or upstream apparatus, and send the request of creating a multicast forwarding subtree to the forwarding path module.

The forwarding path module creates a forwarding path corresponding to the apparatus in the multicast forwarding subtree according to the request of creating a multicast forwarding subtree from the receiving module.

Evidently, when the multicast apparatus in this embodiment needs to forward data, the multicast apparatus needs only to set its own state to change from the standby state to the active state, and forward the multicast data without performing the steps such as path calculation. Therefore, the response period of forwarding the multicast data is shortened, the experience of the multicast application services, especially real-time services, is improved significantly, and the development of the multicast services is expedited.

Besides, when the downstream apparatus of the multicast apparatus joins and quits the multicast forwarding tree frequently, the multicast apparatus does not need to create and prune the same forwarding path repeatedly. When the downstream apparatus quits, the multicast apparatus needs only to stop forwarding the multicast data, and still stores the corresponding forwarding path in the multicast forwarding subtree. Therefore, the load of the multicast apparatus is relieved, the processing efficiency of the multicast apparatus is improved, and the requirements on development of the multicast services are fulfilled.

The foregoing technical solution reveals that in the embodiments of the present invention, when the created multicast forwarding subtree does not need to forward data, the multicast forwarding subtree is set to be in a state of not forwarding multicast data; when the created multicast forwarding subtree needs to forward the data, the state of the multicast forwarding subtree changes from the state of not forwarding multicast data to the state of forwarding multicast data in order to forward data. Therefore, when any data needs to be forwarded, the multicast forwarding subtree needs only to change its own state, and the steps such as path calculation are avoided. The response period of forwarding the multicast data is shortened, and the waiting time of the multicast forwarding subtree from requesting of data forwarding to forwarding the data is reduced. When the leaf router sends a join request so that the multicast forwarding subtree needs to send data, the waiting time of the leaf router from sending a join request to receiving the multicast data is reduced, and the experience of receiving the multicast data is improved.

Further, when the multicast forwarding subtree does not need to forward data, the multicast forwarding subtree is set to be in a state of not forwarding multicast data, and the multicast forwarding subtree is retained. For example, when the leaf router quits the multicast forwarding tree, the multicast forwarding subtree corresponding to the leaf router is not pruned. When the leaf router needs to rejoin the multicast forwarding tree, it is not necessary for the multicast forwarding tree to create the same multicast forwarding subtree repeatedly. Especially when the leaf router joins and quits the multicast forwarding tree frequently, the load of the multicast device is relieved, the processing efficiency of the multicast device is improved, and the requirements on the development of the multicast services are fulfilled.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A multicast method, comprising:
setting (11) a multicast forwarding subtree of a multicast forwarding tree to a state of not forwarding multicast data and forbidding to forward multicast data through the multicast forwarding subtree when a leaf router in the multicast forwarding tree fulfills preset quit conditions and leaves the multicast forwarding tree; wherein the multicast forwarding subtree is created corresponding to the leaf router;
retaining the multicast forwarding subtree; and
changing (12) the multicast forwarding subtree from the state of not forwarding the multicast data to a state of forwarding the multicast data and forwarding the multicast data through the multicast forwarding subtree when the leaf router needs to join the multicast forwarding tree again and receive the multicast data.

2. The multicast method of claim 1, **characterized in that** the forbidding of forwarding the multicast data through the multicast forwarding subtree comprises:
receiving, by a first router in the multicast forwarding subtree, a state changeover request from a second router in the multicast forwarding subtree; and
setting , by the first router, a state of an egress interface of a corresponding downstream branch of the multicast forwarding subtree to a state of not forwarding data.

3. The multicast method of claim 1, **characterized in that** the forwarding the multicast data through the multicast forwarding subtree comprises:
receiving, by a first router in the multicast forwarding subtree, a multicast data forwarding request sent by a second router in the multicast forwarding subtree; and
setting, by the first router, a state of an egress interface of a corresponding downstream branch of the multicast forwarding subtree to a state of forwarding data, and forwarding the multicast data to the egress interface.

4. The multicast method according to any one of claims 1-3, **characterized by** further comprising:
creating the multicast forwarding subtree.

5. The multicast method of claim 4, **characterized by** further comprising:
setting the multicast forwarding subtree to be in the state of not forwarding the multicast data in the process of creating the multicast forwarding subtree.

6. The multicast method of claim 5, **characterized in that**:
the creating of the multicast forwarding subtree is performed after the leaf router compliant with preset join conditions sends a request of creating the multicast forwarding subtree.

7. The multicast method of claim 6, **characterized in that** the setting of the multicast forwarding subtree to be in the state of not forwarding the multicast data comprises:
setting, by a router that receives the request of creating the multicast forwarding subtree, the state of the egress interface of the corresponding downstream branch of the multicast forwarding subtree to the state of not forwarding data.

8. A multicast apparatus, comprising:
a multicast data storing module, configured to store multicast data;
a forwarding path module, configured to store a forwarding path corresponding to a multicast forwarding subtree of a multicast forwarding tree; wherein the multicast forwarding subtree is created corresponding to a leaf router;
a state control module, configured to determine whether the multicast forwarding subtree needs to forward data: if the leaf router in the multicast forwarding tree fulfills preset quit conditions and leaves the multicast forwarding tree, set the multicast forwarding subtree to be in a state of not forwarding the multicast data, and send a stop-forwarding command to a forwarding module; if the leaf router needs to join the multicast forwarding tree again and receive the multicast data, set the multicast forwarding subtree to be in a state of forwarding the multicast data, and send a forwarding command to a forwarding module; and
the forwarding module, configured to: stop forwarding the multicast data according to the stop-forwarding command from the state control module; or forward the multicast data from the multicast data storing module according to the forwarding command from the state control module and the forwarding path from the forwarding path module.

9. The multicast apparatus of claim 8, **characterized by** further comprising a receiving module, configured to: receive a multicast data forwarding request or state changeover request from a downstream apparatus or upstream apparatus, and send the multicast data forwarding request or state changeover request to the state control module, wherein:
the state control module is specifically configured to: determine that the apparatus needs to forward the data according to the multicast data forwarding request, set the apparatus to be in the state of forwarding the multicast data, and send the forwarding command to the forwarding module; or determine that the apparatus does not need to forward the data according to the state changeover request, set the apparatus to be in the state of not forwarding the multicast data, and send the stop-forwarding command to the forwarding module.

10. The multicast apparatus of claim 9, **characterized in that**:
the receiving module is further configured to: receive a request of creating the multicast forwarding subtree from the downstream apparatus or upstream apparatus, and send the request of creating the multicast forwarding subtree to the forwarding path module; and
the forwarding path module is specifically configured to create the forwarding path corresponding to the apparatus in the multicast forwarding subtree according to the request of creating the multicast forwarding subtree from the receiving module.

## Patentansprüche

1. Multicast-Verfahren, das folgende Schritte aufweist:
Versetzen (11) eines Multicast-Weiterleitungsteilbaums eines Multicast-Weiterleitungsbaums in einen Zustand des Nicht-Weiterleitens von Multicast-Daten und des Verbietens, Multicast-Daten durch den Multicast-Weiterleitungsteilbaum weiterzuleiten, wenn ein Blatt-Router im Multicast-Weiterleitungsbaum vorgegebene Beendigungsbedingungen erfüllt und den Multicast-Weiterleitungsbaum verlässt; wobei der Multicast-Weiterleitungsteilbaum entsprechend zum Blatt-Router erzeugt wird;
Erhalten des Multicast-Weiterleitungsteilbaums; und
Ändern (12) des Multicast-Weiterleitungsteilbaums vom Zustand des Nicht-Weiterleitens der Multicast-Daten in einen Zustand des Weiterleitens der Multicast-Daten und Weiterleiten der Multicast-Daten durch den Multicast-Weiterleitungsteilbaum, wenn sich der Blatt-Router dem Multicast-Weiterleitungsbaum wieder anschließen und die Multicast-Daten empfangen muss.

2. Multicast-Verfahren nach Anspruch 1, **dadurch gekennzeichnet, dass** das Verbieten des Weiterleitens der Multicast-Daten durch den Multicast-Weiterleitungsteilbaum aufweist:
Empfangen durch einen ersten Router im Multicast-Weiterleitungsteilbaum einer Zustandswechselanforderung von einem zweiten Router im Multicast-Weiterleitungsteilbaum; und
Versetzen durch den ersten Router eines Zustands einer Ausgangsschnittstelle eines entsprechenden Abwärtsstreckenzweigs des Multicast-Weiterleitungsteilbaums in einen Zustand des Nicht-Weiterleitens von Daten.

3. Multicast-Verfahren nach Anspruch 1, **dadurch gekennzeichnet, dass** das Weiterleiten der Multicast-Daten durch den Multicast-Weiterleitungsteilbaum aufweist:
Empfangen durch einen ersten Router im Multicast-Weiterleitungsteilbaum einer Multicast-Datenweiterleitungsanforderung, die durch einen zweiten Router im Multicast-Weiterleitungsteilbaum gesendet wird; und
Versetzen durch den ersten Router eines Zustands einer Ausgangsschnittstelle eines entsprechenden Abwärtsstreckenzweigs des Multicast-Weiterleitungsteilbaums in einen Zustand des Weiterleitens von Daten und Weiterleiten der Multicast-Daten zur Ausgangsschnittstelle.

4. Multicast-Verfahren nach einem der Ansprüche 1 bis 3, **dadurch gekennzeichnet, dass** es ferner aufweist:
Erzeugen des Multicast-Weiterleitungsteilbaums.

5. Multicast-Verfahren nach Anspruch 4, **dadurch gekennzeichnet, dass** es ferner aufweist:
Versetzen des Multicast-Weiterleitungsteilbaums in den Zustand des Nicht- Weiterleitens der Multicast-Daten im Prozess des Erzeugens des Multicast-Weiterleitungsteilbaums.

6. Multicast-Verfahren nach Anspruch 5, **dadurch gekennzeichnet, dass**:
das Erzeugen des Multicast-Weiterleitungsteilbaums durchgeführt wird, nachdem der Blatt-Router entsprechend der vorgegebenen Anschlussbedingungen eine Anforderung zum Erzeugen des Multicast-Weiterleitungsteilbaums sendet.

7. Multicast-Verfahren nach Anspruch 6, **dadurch gekennzeichnet, dass** das Versetzen des Multicast-Weiterleitungsteilbaums in den Zustand des Nicht-Weiterleitens der Multicast-Daten aufweist:
Versetzen durch einen Router, der die Anforderung zum Erzeugen des Multicast-Weiterleitungsteilbaums empfängt, des Zustands der Ausgangsschnittstelle des entsprechenden Abwärtsstreckenzweigs des Multicast-Weiterleitungsteilbaums in den Zustand des Nicht-Weiterleitens von Daten.

8. Multicast-Vorrichtung, die Folgendes aufweist:
ein Multicast-Datenspeichermodul, das konfiguriert ist, Multicast-Daten zu speichern;
ein Weiterleitungspfadmodul, das konfiguriert ist, einen Weiterleitungspfad zu speichern, der einem Multicast-Weiterleitungsteilbaum eines Multicast-Weiterleitungsbaums entspricht; wobei der Multicast-Weiterleitungsteilbaum entsprechend zu einem Blatt-Router erzeugt wird;
ein Zustandssteuermodul, das konfiguriert ist, festzustellen, ob der Multicast-Weiterleitungsteilbaum Daten weiterleiten muss: wenn der Blatt-Router im Multicast-Weiterleitungsbaum vorgegebene Beendigungsbedingungen erfüllt und den Multicast-Weiterleitungsbaum verlässt, den Multicast-Weiterleitungsteilbaum in einen Zustand des Nicht-Weiterleitens der Multicast-Daten zu versetzen und einen Weiterleitungsstoppbefehl an ein Weiterleitungsmodul zu senden; wenn sich der Blatt-Router dem Multicast-Weiterleitungsbaum wieder anschließen und die Multicast-Daten empfangen muss, den Multicast-Weiterleitungsteilbaum in einen Zustand des Weiterleitens der Multicast-Daten zu versetzen und einen Weiterleitungsbefehl an ein Weiterleitungsmodul zu senden; und
das Weiterleitungsmodul, das konfiguriert ist, das Weiterleiten der Multicast-Daten gemäß des Weiterleitungsstoppbefehls vom Zustandssteuermodul zu stoppen; oder
die Multicast-Daten vom Multicast-Datenspeichermodul gemäß des Weiterleitungsbefehls vom Zustandssteuermodul und des Weiterleitungspfads vom Weiterleitungspfadmodul weiterzuleiten.

9. Multicast-Vorrichtung nach Anspruch 8, **dadurch gekennzeichnet, dass** sie ferner ein Empfangsmodul aufweist, das konfiguriert ist, eine Multicast-Datenweiterleitungsanforderung oder eine Zustandswechselanforderung von einer Abwärtsstreckenvorrichtung oder Aufwärtsstreckenvorrichtung zu empfangen, und die Multicast-Datenweiterleitungsanforderung oder Zustandswechselanforderung an das Zustandssteuermodul zu senden, wobei:
das Zustandssteuermodul insbesondere konfiguriert ist, festzustellen, dass die Vorrichtung die Daten gemäß der Multicast-Datenweiterleitungsanforderung weiterleiten muss, die Vorrichtung in den Zustand des Weiterleitens der Multicast-Daten zu versetzen und den Weiterleitungsbefehl an das Weiterleitungsmodul zu senden; oder
festzustellen, dass die Vorrichtung die Daten gemäß der Zustandswechselanforderung nicht weiterleiten muss, die Vorrichtung in den Zustand des Nicht-Weiterleitens der Multicast-Daten zu versetzen und den Weiterleitungsstoppbefehl an das Weiterleitungsmodul zu senden.

10. Multicast-Vorrichtung nach Anspruch 9, **dadurch gekennzeichnet, dass**:
das Empfangsmodul ferner konfiguriert ist, eine Anforderung zum Erzeugen des Multicast-Weiterleitungsteilbaums von der Abwärtsstreckenvorrichtung oder Aufwärtsstreckenvorrichtung zu empfangen, und die Anforderung zum Erzeugen des Multicast-Weiterleitungsteilbaums an das Weiterleitungspfadmodul zu senden; und
das Weiterleitungspfadmodul insbesondere konfiguriert ist, den Weiterleitungspfad entsprechend der Vorrichtung im Multicast-Weiterleitungsteilbaum gemäß der Anforderung zum Erzeugen des Multicast-Weiterleitungsteilbaums vom Empfangsmodul zu erzeugen.

## Revendications

1. Procédé de multidiffusion, comprenant :
l'établissement (11) d'une sous-arborescence d'acheminement de multidiffusion d'une arborescence d'acheminement de multidiffusion sur un état de non-acheminement de données de multidiffusion et l'interdiction de l'acheminement de données de multidiffusion par le biais de la sous-arborescence d'acheminement de multidiffusion quand un routeur feuille dans l'arborescence d'acheminement de multidiffusion remplit des conditions d'abandon préétablies et quitte l'arborescence d'acheminement de multidiffusion ; dans lequel la sous-arborescence d'acheminement de multidiffusion est créée pour correspondre au routeur feuille ;
la retenue de la sous-arborescence d'acheminement de multidiffusion ; et
le changement (12) de la sous-arborescence d'acheminement de multidiffusion de l'état de non-acheminement des données de multidiffusion à un état d'acheminement des données de multidiffusion et l'acheminement des données de multidiffusion par le biais de la sous-arborescence d'acheminement de multidiffusion quand le routeur feuille doit se joindre à nouveau à l'arborescence d'acheminement de multidiffusion et recevoir les données de multidiffusion.

2. Procédé de multidiffusion selon la revendication 1, **caractérisé en ce que** l'interdiction de l'acheminement des données de multidiffusion par le biais de la sous-arborescence d'acheminement de multidiffusion comprend :
la réception, par un premier routeur dans la sous-arborescence d'acheminement de multidiffusion, d'une requête de permutation d'état depuis un second routeur dans la sous-arborescence d'acheminement de multidiffusion ; et
le réglage, par le premier routeur, d'un état d'une interface de sortie d'une branche aval correspondante de la sous-arborescence d'acheminement de multidiffusion sur un état de non-acheminement de données.

3. Procédé de multidiffusion selon la revendication 1, **caractérisé en ce que** l'acheminement des données de multidiffusion par le biais de la sous-arborescence d'acheminement de multidiffusion comprend :
la réception, par un premier routeur dans la sous-arborescence d'acheminement de multidiffusion, d'une requête d'acheminement de données de multidiffusion envoyée par un second routeur dans la sous-arborescence d'acheminement de multidiffusion ;
et
le réglage, par le premier routeur, d'un état d'une interface de sortie d'une branche aval correspondante de la sous-arborescence d'acheminement de multidiffusion sur un état d'acheminement de données, et l'acheminement des données de multidiffusion jusqu'à l'interface de sortie.

4. Procédé de multidiffusion selon l'une quelconque des revendications 1 à 3, **caractérisé en ce qu'**il comprend en outre :
la création de la sous-arborescence d'acheminement de multidiffusion.

5. Procédé de multidiffusion selon la revendication 4, **caractérisé en ce qu'**il comprend en outre :
le réglage de la sous-arborescence d'acheminement de multidiffusion sur un état de non-acheminement des données de multidiffusion dans le processus de création de la sous-arborescence d'acheminement de multidiffusion.

6. Procédé de multidiffusion selon la revendication 5, **caractérisé en ce que** :
la création de la sous-arborescence d'acheminement de multidiffusion est exécutée après que le routeur feuille conforme à des conditions préétablies de jonction envoie une requête de création de la sous-arborescence d'acheminement de multidiffusion.

7. Procédé de multidiffusion selon la revendication 6, **caractérisé en ce que** le réglage de la sous-arborescence d'acheminement de multidiffusion sur l'état de non-acheminement des données de multidiffusion comprend :
le réglage, par un routeur qui reçoit la requête de création de la sous-arborescence d'acheminement de multidiffusion, de l'état de l'interface de sortie de la branche aval correspondante de la sous-arborescence d'acheminement de multidiffusion sur l'état de non-acheminement de données.

8. Appareil de multidiffusion, comprenant :
un module de mémorisation de données de multidiffusion, configuré pour mémoriser des données de multidiffusion ;
un module de voie d'acheminement, configuré pour mémoriser une voie d'acheminement correspondant à une sous-arborescence d'acheminement de multidiffusion d'une arborescence d'acheminement de multidiffusion ; la sous-arborescence d'acheminement de multidiffusion étant créée pour correspondre à un routeur feuille ;
un module de commande d'état, configuré pour déterminer que la sous-arborescence d'acheminement de multidiffusion doit acheminer ou non des données : si le routeur feuille dans l'arborescence d'acheminement de multidiffusion remplit des conditions d'abandon préétablies et quitte l'arborescence d'acheminement de multidiffusion, régler la sous-arborescence d'acheminement de multidiffusion sur un état de non-acheminement des données de multidiffusion, et envoyer une commande d'arrêt d'acheminement à un module d'acheminement ; si le routeur feuille doit se joindre à nouveau à l'arborescence d'acheminement de multidiffusion et recevoir les données de multidiffusion, régler la sous-arborescence d'acheminement de multidiffusion sur un état d'acheminement des données de multidiffusion, et envoyer une commande d'acheminement à un module d'acheminement ; et
le module d'acheminement, configuré pour : arrêter l'acheminement des données de multidiffusion en fonction de la commande d'arrêt d'acheminement provenant du module de commande d'état ; ou acheminer les données de multidiffusion provenant du module de mémorisation de données de multidiffusion en fonction de la commande d'acheminement provenant du module de commande d'état et la voie d'acheminement provenant du module de voie d'acheminement.

9. Appareil de multidiffusion selon la revendication 8, **caractérisé en ce qu'**il comprend en outre un module de réception, configuré pour : recevoir une requête d'acheminement de données de multidiffusion ou une requête de permutation d'état depuis un appareil aval ou un appareil amont, et envoyer la requête d'acheminement de données de multidiffusion ou la requête de permutation d'état au module de commande d'état, dans lequel :
le module de commande d'état est configuré spécifiquement pour : déterminer que l'appareil doit acheminer les données en fonction de la requête d'acheminement de données de multidiffusion, régler l'appareil sur l'état d'acheminement des données de multidiffusion, et envoyer la commande d'acheminement au module d'acheminement ; ou déterminer que l'appareil n'a pas à acheminer les données en fonction de la requête de permutation d'état, régler l'appareil sur l'état de non-acheminement des données de multidiffusion, et envoyer la commande d'arrêt d'acheminement au module d'acheminement.

10. Appareil de multidiffusion selon la revendication 9, **caractérisé en ce que** :
le module de réception est configuré en outre pour : recevoir une requête de création de la sous-arborescence d'acheminement de multidiffusion depuis l'appareil aval ou l'appareil amont, et envoyer la requête de création de la sous-arborescence d'acheminement de multidiffusion au module de voie d'acheminement ; et
le module de voie d'acheminement est configuré spécifiquement pour créer la voie d'acheminement correspondant à l'appareil dans la sous-arborescence d'acheminement de multidiffusion en fonction de la requête de création de la sous-arborescence d'acheminement de multidiffusion provenant du module de réception.
